# FASCICULE DE BREVET EUROPEEN

(11) **EP 0 868 319 B1**
(45) Date de publication et mention de la délivrance du brevet: **10.10.2001**
(21) Numéro de dépôt: 96941710.4
(22) Date de dépôt: 05.12.1996
(51) Int. Cl.: B60H 1/24

(54) **INSTALLATION DE CONDITIONNEMENT D'AIR POUR HABITACLE, NOTAMMENT DE VEHICULE AUTOMOBILE**
KLIMAANLAGE, INSBESONDERE FÜR FAHRZEUGINSASSEN
PASSENGER COMPARTMENT AIR CONDITIONING APPARATUS, IN PARTICULAR FOR MOTOR VEHICLES

(30) Priorité: 19.12.1995 FR 9515592
(43) Date de publication de la demande: 07.10.1998
(73) Titulaire: PLASTIC OMNIUM AUTO INTERIEUR, 69007 Lyon (FR)
(72) Inventeur: DAUVERGNE, Jean, F-59147 Gondecourt (FR)
(74) Mandataire: Duthoit, Michel
(86) Numéro de dépôt international: FR9601947
(87) Numéro de publication internationale: WO9722490

(56) Documents cités:
- DE-A- 3 626 790
- DE-U- 1 771 865
- FR-A- 2 009 111

## Description

La présente invention concerne une installation de conditionnement d'air pour habitacle, notamment de véhicule automobile.

Bien que plus particulièrement destinée à de telles applications, l'invention pourra également être utilisée dans tous les secteurs de l'activité économique dans lesquels on est amené à guider la circulation d'un fluide.

Actuellement, dans le domaine des véhicules automobiles par exemple, on connaît de nombreux dispositifs permettant d'acheminer l'air d'un générateur de flux vers l'habitacle intérieur du véhicule. Ils sont généralement constitués d'un réseau de conduits, dissimulés sous le tableau de bord, terminé par un diffuseur débouchant à travers ce dernier.

Afin de ventiler au mieux l'habitacle, lesdits diffuseurs sont, le plus souvent, au nombre de quatre : deux au centre chargés de projeter un jet d'air aux passagers arrière entre les sièges avant et deux autres, situés latéralement, envoyant chacun un jet en direction des passagers avant et, accessoirement, en direction des vitres latérales de manière à participer à leur dégivrage et/ou, désembuage. Un dispositif ayant les caractéristiques du préambule de la revendication 1 est décrit dans DE-A-3 626 790.

Dans les dispositifs connus, les conduits présentent une structure tubulaire. Quant au diffuseur, il est emboîté à l'extrémité d'un des conduits à travers un logement prévu sous le tableau de bord. Pour cela, une gorge est ménagée sur les parois internes dudit conduit tubulaire de manière à coopérer avec ledit diffuseur.

Toutefois, l'étanchéité de telles installations n'est pas satisfaisante. En effet, le diffuseur est généralement ajusté dans la gorge avec une précision trop faible, ce qui entraîne des pertes de charge obligeant à surdimensionner le générateur de flux.

Il est également à noter que ce mauvais ajustement peut être la source de bruit, notamment sous l'effet de vibrations.

De plus, les installations actuellement connues nécessitent la mise en oeuvre de nombreuses pièces supplémentaires afin de supporter à la fois les conduits et le diffuseur. Elles sont donc d'un montage long et coûteux.

Le but de la présente invention est de proposer une installation de conditionnement d'air qui pallie les inconvénients précités et permette d'assurer une étanchéité améliorée de la circulation du flux.

Un autre but de la présente invention est de proposer une installation de conditionnement d'air dont la fabrication soit simplifiée.

Un autre but de la présente invention est de proposer une installation de conditionnement d'air pour habitacle qui participe à la diminution du niveau de bruit dans ledit habitacle.

Un autre but de la présente invention est de proposer une installation de conditionnement d'air qui, en cas d'application au domaine des véhicules automobiles, participe à la simplification des procédés de fabrication de tableaux de bord.

D'autres buts et avantages de la présente invention apparaîtront au cours de la description qui va suivre qui n'est donnée qu'à titre indicatif et qui n'a pas pour but de la limiter.

La présente invention concerne une installation de conditionnement d'air pour habitacle, notamment de véhicule automobile, comprenant au moins un conduit de circulation d'air et un diffuseur, communiquant avec ledit conduit, non co-linéaire par rapport à ce dernier, aptes à canaliser l'air vers l'habitacle, caractérisée par le fait que :
- le diffuseur présente des moyens pour obturer transversalement ledit conduit,
- le conduit est constitué d'une matière apte à se déformer au contact dudit diffuseur de manière à assurer l'étanchéité de l'obturation.

La présente invention sera mieux comprise à la lecture de la description suivante accompagnée des dessins en annexe qui en font partie intégrante.

La figure 1 décrit, selon une coupe réalisée d'après un plan horizontal, un exemple d'installation de conditionnement d'air conforme à l'invention.

La figure 2 détaille la région repérée II à la figure 1.

La figure 3 illustre un exemple d'environnement d'une installation de conditionnement d'air conforme à l'invention.

La présente invention concerne une installation de conditionnement d'air pour habitacle, notamment de véhicule automobile.

Bien que plus particulièrement destinée à de telles applications, l'invention pourra également être utilisée dans tous les secteurs de l'activité économique dans lesquels on est amené à guider la circulation d'un fluide.

Par conditionnement d'air, on entend, de manière générale, aération, chauffage et/ou climatisation de l'habitacle ou autre.

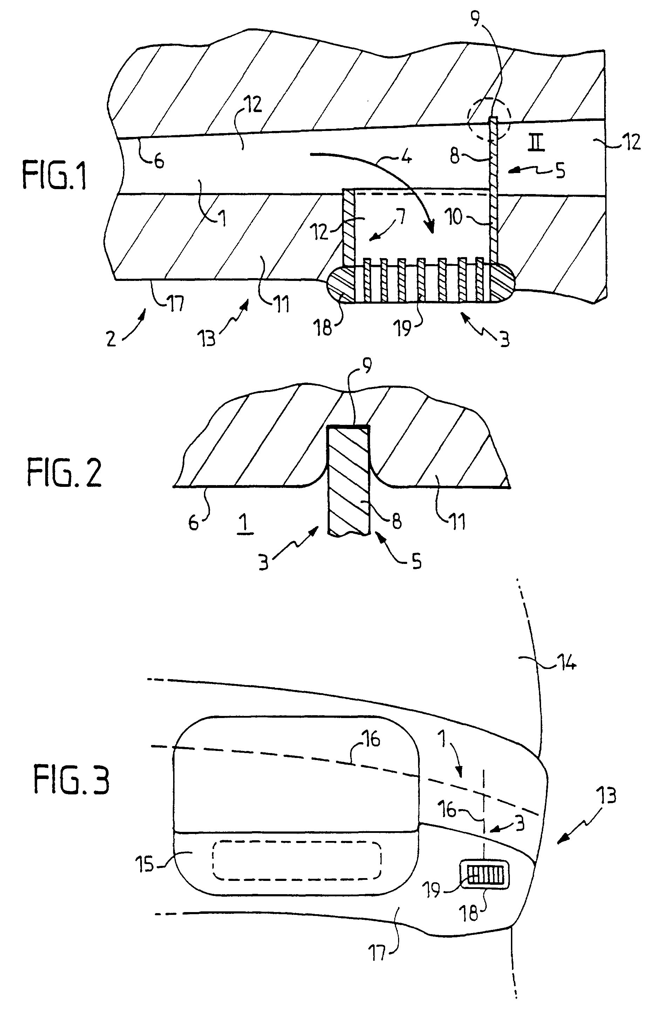

Si l'on se reporte à la figure 1, on constate que l'installation de conditionnement d'air pour habitacle, conforme à l'invention, comprend au moins un conduit 1 de circulation d'air. Ce dernier se trouve, par exemple, derrière la surface 2 de la paroi de l'habitacle. En cas d'application dans le domaine des véhicules automobiles, le conduit 1 se trouve ainsi, notamment, sous la surface externe du tableau de bord dudit véhicule.

L'installation de conditionnement d'air conforme à l'invention comprend également un diffuseur 3, communiquant avec ledit conduit 1 et non co-linéaire par rapport à ce dernier.

Le conduit 1 et le diffuseur 3 permettent ainsi de canaliser l'air, par exemple, selon le sens de la flèche repérée 4, notamment d'un générateur de flux vers l'intérieur de l'habitacle.

Selon l'invention, le diffuseur 3 présente des moyens 5 pour obturer transversalement le conduit 1. De plus, ledit conduit 1 est constitué d'une matière apte à se déformer au contact dudit diffuseur 3 de manière à assurer l'étanchéité de l'obturation.

Comme détaillé à la figure 2, le diffuseur 3 coopère ainsi avec le conduit 1 en pénétrant dans la matière de sa paroi interne 6 et assure de la sorte la fiabilité de l'étanchéïté entre ces deux pièces. En effet, le conduit 1 étant déformé directement par le diffuseur 3, il ne reste aucun jeu résiduel, apte à laisser passer, même partiellement, le flux d'air.

Ledit diffuseur 3 est monté, par exemple, par pénétration à force dans le conduit 1, notamment en dépassant les limites d'élasticité de la matière le constituant.

Si l'on se reporte de nouveau à la figure 1, on constate que, selon un mode particulier de réalisation, le diffuseur 3 est constitué, par exemple, d'un manchon 7. Les moyens pour obturer 5, quant à eux, sont constitués, notamment, par un prolongement 8 dudit manchon 7 dont les contours 9 épousent les parois 6 du conduit 1 en les déformant.

Ledit conduit 1 présente, par exemple, une section circulaire tandis que le manchon 3 est orienté, notamment, sensiblement perpendiculairement par rapport audit conduit 1 et comprend une jupe 10, par exemple de section sensiblement rectangulaire.

Selon cet exemple de mise en oeuvre, le prolongement 8 est alors sensiblement plan. Il peut être également, éventuellement, légèrement incurvé et/ou coudé de manière à faciliter la déviation du flux d'air selon la flèche repérée 4.

Cela étant, selon l'exemple illustré, l'installation de conditionnement d'air conforme à l'invention comprend au moins un support 11 dans lequel sont ménagés des évidements 12, aptes à constituer,notamment, ledit conduit 1 et/ou un logement pour ledit diffuseur 3.

Ledit conduit 1 présente ainsi l'avantage de réaliser simultanément deux fonctions, à savoir participer au guidage du flux d'air et supporter le diffuseur 3. Il en est de même pour ce dernier qui permet à la fois de boucher ledit conduit 1 et de participer également au guidage du flux. Ce mode de mise en oeuvre contribue donc à faciliter la fabrication de l'installation conforme à l'invention.

A ce sujet, le conduit 1 est, par exemple, cônique. Ceci permet de simplifier sa formation lorsqu'il est constitué par un évidement 12 du support 11. En effet, dans ce cas, ledit support 11 est obtenu, par exemple, par moulage et lesdits évidements 12, notamment, par des broches rétractables du moule prévu à cet effet. La forme conique du conduit 3 favorise donc le démoulage.

Si l'on se reporte maintenant à la figure 3, on observe la partie avant, côté passager, d'un habitacle de véhicule. On retrouve ainsi, de manière schématique un tableau de bord 13 au-dessus duquel s'élève un pare-brise 14.

Comme évoqué plus haut, l'installation de conditionnement d'air conforme à l'invention peut être utilisée, notamment, dans un tel habitacle, par exemple au niveau dudit tableau de bord 13, l'emplacement des conduits 1 et diffuseurs 3 étant schématisé par les traits en pointillés repérés 16. Ledit diffuseur 3 débouche à la surface 17 dudit tableau de bord 13.

Par ailleurs, ce dernier présente, en outre, de manière connue, notamment, un dispositif 15 pour coussin gonflable.

Selon cet exemple d'application de l'invention, on constate, comme représenté à la figure 1, que le conduit 1 est réalisé dans ledit tableau de bord 13, par exemple constitué par le support 11 prévu en un matériau massif, notamment alvéolaire.

On entend par là que ledit tableau de bord 13 est formé d'un bloc de matériau dans lequel sont aménagées des réservations telles que les évidements 12 de manière à constituer, comme évoqué plus haut, le conduit 1 et/ou un logement pour le diffuseur 3.

De tels tableaux de bord occupent la cavité précédemment définie entre le tablier avant et les tableaux de bord, en forme de coque, rencontrés dans les véhicules connus.

Un tel mode de mise en oeuvre participe ainsi à la simplification des procédés de fabrication de tableaux de bord.

Un autre avantage de l'invention est que le diffuseur 3 se révèle alors universel et peut être utilisé sur le tableau de bord 13 aussi bien du côté passager que du côté conducteur.

Selon un mode particulier de mise en oeuvre de l'invention, le diffuseur 3 comprend une collerette 18 apte à coopérer avec la surface 17 du tableau de bord 13.

Ladite collerette 18 présente, par exemple, une grille d'aération 19, apte à permettre le réglage de l'orientation du jet d'air dans l'habitacle.

Le conduit 1 est réalisé, notamment, en mousse et/ou en un matériau polymère expansé, par exemple souple en surface. Il pourra s'agir, notamment, de polypropylène et/ou de polystyrène expansé.

Par ailleurs, le diffuseur 3 est réalisé, notamment, en un matériau plastique moulé, par exemple rigide.

Il est également à noter que la présente invention peut aussi s'appliquer aux tableaux de bord réalisés en mousse du type polyuréthane souple, rigide ou semi-rigide.

Naturellement, d'autres mises en oeuvre de la présente invention, à la portée de l'homme de l'art, auraient pu être envisagées sans pour autant sortir du cadre de la présente demande.

## Revendications

1. Installation de conditionnement d'air pour habitacle, notamment de véhicule automobile, comprenant au moins un conduit (1) de circulation d'air et un diffuseur (3), communiquant avec ledit conduit (1), non co-linéaire par rapport à ce dernier, aptes à canaliser l'air vers l'habitacle, ledit conduit (1) étant constitué d'une matière apte à se déformer au contact dudit diffuseur (3), **caractérisée par** le fait que le diffuseur (3) présente des moyens (5) pour obturer transversalement ledit conduit (1), constitués par un prolongement (8) dudit diffuseur dont les contours (9) épousent les parois (6) du conduit (1) en les déformant de manière à assurer l'étanchéité de l'obturation.

2. Installation selon la revendication 1, dans laquelle le diffuseur (3) est constitué d'un manchon (7).

3. Installation selon la revendication 2, dans laquelle le conduit (1) présente une section circulaire et le manchon (7) est orienté sensiblement perpendiculairement par rapport audit conduit (1) et comprend une jupe (10) de section sensiblement rectangulaire, ledit prolongement étant sensiblement plan.

4. Installation selon la revendication 1, dans laquelle ledit conduit (1) est cônique.

5. Installation selon la revendication 1, dans laquelle ledit conduit (1) est réalisé dans un tableau de bord (13) constitué par un support (11) en matériau massif.

6. Installation selon la revendication 5, dans laquelle ledit diffuseur (3) comprend une collerette (18) apte à coopérer avec la surface (17) du tableau de bord (13).

7. Installation selon la revendication 6, dans laquelle la collerette (18) présente une grille d'aération (19).

8. Installation selon la revendication 1, dans laquelle le conduit (1) est réalisé en mousse et/ou en matériau polymère expansé.

9. Installation selon la revendication 1, dans laquelle le conduit (1) est constitué en polypropylène et/ou en polystyrène expansé.

10. Installation selon la revendication 1, dans laquelle le diffuseur (3) est réalisé en matériau plastique moulé.

## Patentansprüche

1. Klimaanlage für Fahrgastraum, nämlich eines Kraftfahrzeuges, umfassend wenigstens eine Luftumlaufleitung (1) und einen mit der genannten Leitung (1) in Verbindung stehenden und nicht-kolinear zu dieser letzten verlaufenden Lufttricher (3), welche geeignet sind, die Luft zum Fahrgastraum zu leiten, wobei die genannte Leitung (1) aus einem Material besteht, das geeignet ist, sich bei Berührung mit dem genannten Lufttricher (3) zu verformen, **dadurch gekennzeichnet, daß** der Lufttricher (3) Mittel (5) umfaßt, um die genannte Leitung (1) in Querrichtung zu verschließen, welche aus einer Verlängerung (8) des genannten Lufttrichers bestehen, dessen Konturen (9) sich den Wänden (6) der Leitung (1) anpassen, indem sie diese so verformen, daß die Dichtheit der Verschließung gewährleistet wird.

2. Anlage nach Anspruch 1, bei der der Lufttricher (3) aus einer Muffe (7) besteht.

3. Anlage nach Anspruch 2, bei der die Leitung (1) einen kreisförmigen Querschnitt aufweist und die Muffe (7) im wesentlichen senkrecht zu der genannten Leitung (1) gerichtet ist und eine im Querschnitt im wesentlichen rechteckige Schürze (10) umfaßt, wobei die genannte verlängerung im wesentlichen flach ist.

4. Anlage nach Anspruch 1, bei der die genannte Leitung (1) kegelförmig ist.

5. Anlage nach Anspruch 1, bei der die genannte Leitung (1) in einem Instrumentenbrett (13), der aus einem Gestell (11) aus massivem Material besteht, vorgesehen ist.

6. Anlage nach Anspruch 5, bei der der genannte Lufttricher (3) einen Flansch (18) umfaßt, der geeignet ist, mit der Oberfläche (17) des Instrumentenbretts (13) zusammenzuwirken.

7. Anlage nach Anspruch 6, bei der der Flansch (18) ein Lüftungsgitter (19) aufweist.

8. Anlage nach Anspruch 1, bei der die Leitung (1) aus Schaumstoff und/oder aus Schaumpolymermaterial hergestellt ist.

9. Anlage nach Anspruch 1, bei der die Leitung (1) aus Polypropylen und/oder aus Schaumpolystyrol hergestellt ist.

10. Anlage nach Anspruch 1, bei der der Lufttricher (3) aus formgegossenem Kunststoffmaterial hergestellt ist.

## Claims

1. Air conditioning installation for a passenger compartment, in particular of a motor vehicle, including at least an air circulation conduit (1) and a diffuser (3), communicating with said conduit (1), non co-linear in relation to the latter, capable of channelling the air towards the passenger compartment, said conduit (1) being constituted by a material capable of being deformed in contact with said diffuser (3), **characterised by** the fact that the diffuser (3) has means (5) for transversely closing said conduit (1), constituted by a prolongation (8) of said diffuser, the contours (9) of which mate with the walls (6) of the conduit (1) by deforming them so as to ensure the air tightness of the closure.

2. Installation according to claim 1, in which the diffuser (3) is constituted by a sleeve (7).

3. Installation according to claim 2, in which the conduit (1) has a circular cross-section and the sleeve (7) is orientated substantially perpendicularly in relation to said conduit (1) and includes a skirt (10) having a substantially rectangular cross-section, said prolongation being substantially flat.

4. Installation according to claim 1, in which said conduit (1) is conical.

5. Installation according to claim 1, in which said conduit (1) is produced in a dashboard (13) constituted by a support (11) made of a solid material.

6. Installation according to claim 5, in which said diffuser (3) includes a collar (18) capable of co-operating with the surface (17) of the dashboard (13).

7. Installation according to claim 6, in which the collar (18) has a ventilation grating (19).

8. Installation according to claim 1, in which the conduit (1) is made of foam and/or an expanded polymer material.

9. Installation according to claim 1, in which the conduit (1) is made of polypropylene and/or expanded polystyrene.

10. Installation according to claim 1, in which the diffuser (3) is made of moulded plastic material.
